Europäisches Patentamt

European Patent Office

Office européen des brevets

(11) Publication number: **0 255 185**
**A1**

## EUROPEAN PATENT APPLICATION

(21) Application number: 87201451.9

(51) Int. Cl.⁴: **G11B 23/03**

(22) Date of filing: 29.07.87

(30) Priority: 29.07.86 NL 8601944

(43) Date of publication of application:
**03.02.88 Bulletin 88/05**

(84) Designated Contracting States:
**AT CH DE ES FR GB IT LI NL SE**

(71) Applicant: **Optical Storage International
Holland
Emmasingel 6
NL-5611 AZ Eindhoven(NL)**

(72) Inventor: **Peeters, Hendrikus Wilhelmus
Cornelius Maria
c/o INT. OCTROOIBUREAU B.V. Prof.
Holstlaan 6
NL-5656 AA Eindhoven(NL)**

(74) Representative: **Hartung, Edgar Erwin et al
INTERNATIONAAL OCTROOIBUREAU B.V.
Prof. Holstlaan 6
NL-5656 AA Eindhoven(NL)**

(54) Disc cassette comprising an information disc.

(57) A disc cassette for a readable information disc (1) comprises an enclosure (2) in which the information disc is situated with clearance and which enclosure comprises parallel main walls (3A, B), side walls (4A, B; 5A, B) and a rear wall (6A, B), a central aperture (7A, B) being formed in at least one of the main walls to provide access to the information disc for the drive spindle of a drive apparatus, and a slot (8A, B) for the passage of a recording and/or reproducing head of the drive apparatus, which openings can both be closed by a slidable shutter (9). The disc cassette comprises a slide (11) which is slidable on the enclosure with the aid of parallel guide means, to which slide the shutter (9) is rigidly connected, so that the slide and the shutter are together movable between the operational position and the closed position.

FIG. 3

## "Disc cassette comprising an information disc".

The invention relates to a disc cassette comprising: a readable information disc, an enclosure in which the information disc is arranged and comprising parallel main walls interconnected by side walls, at least one of the main walls being formed with a central aperture for the passage of a drive spindle of a drive apparatus and a slot for the passage of information recording and/or reproducing means of the drive apparatus; and a shutter which is movable over the outside of the enclosure between a closed position and an operational position, which shutter in its operational position exposes in its closed position closes at least the slot.

A disc cassette of this type is known, for example, from British Patent Application GB 2163887 A, which has been laid open to public inspection. Such disc cassettes are used in conjunction with an information disc which contains prerecorded information or which may be provided with information by a user, for example by means of a magnetic head or a laser beam. The shutter is required to be readily movable over the enclosure to enable to be displaced without any problems between the closed position and the operational position with the aid of the appropriate means in a drive apparatus. Another requirement imposed on the shutter is that it should be firmly anchored to the enclosure and cannot come loose of the enclosure when the disc cassette is handled normally. Even in the event of more exceptional situations, for example when the disc cassette is handled roughly or is dropped, this should not render the disc cassette unserviceable.

In said known disc cassette the problem of reliably yet slidably securing the shutter to the enclosure is solved by providing the shutter with a tab which slides underneath a projecting portion of the enclosure at one side in conjunction with a bent tab which engages an external ridge in the enclosure at the other side. Disadvantages of this known method of mounting the shutter is that it is less suitable for shutters not made of metal sheet. Another problem is that the shutter must be bent to enable it to be mounted on the enclosure in the correct position, which may lead to the shutter being bent excessively. Yet another problem is the fact that the shutter should not only be mounted on the enclosure but must also be connected to a tension spring arranged inside the enclosure to urge the shutter towards the closed position. Thus, mounting of the shutter requires a combination of operations, which complicates mounting. In particular connecting the shutter to the spring inside the enclosure is problematic. Still another disadvantage of the known shutter is that it is less suitable to cooperate with internal or external elements such as the said spring and said means of a drive apparatus. Since the shutter is made of thin metal sheet it is not unlikely that sharp portions or edges of the shutter may damage or even destroy the relevant elements.

It is the object of the invention to provide a disc cassette of the type defined in the opening paragraph which has the advantage that the shutter is uniformly and easily movable, is easy to mount on the enclosure and can be manufactured from a material other than metal sheet without any problems. To this end the invention is characterized in that the disc cassette is provided with a slide which is slidably connected to the enclosure by parallel guide means, and in that the shutter is rigidly connected to the slide, so that the slide and the shutter are together slidable between the operational position and the closed position. An essential feature of the invention is that specially for the purpose of mounting and moving the shutter there is provided an additional part on which the shutter can be mounted rapidly and simply. A particularly advantageous embodiment of the invention is characterized in that the disc cassette comprises resilient means for moving the shutter from the operational position to the closed position and in that the resilient means act on the slide.

The invention cannot only be applied to shutters not made of metal sheet, but is also suitable for use with metal-sheet shutters.

The very fact that there is provided a separate slide which, in principle, can be made of any suitable material makes it possible to utilize constructions which mitigate or eliminate the disadvantages of the use of a metal-sheet shutter. A disadvantage of metal-sheet shutters is that the means provided in a drive apparatus for moving the shutter are subject to a substantial degree of wear because these means must cooperate with an edge of an aperture formed in the metal sheet. A disc cassette in accordance with the invention enables said means of the drive apparatus to cooperate directly with the slide instead of the shutter. The resilient means provided in the disc cassette for urging the shutter towards the closed position are preferably capable of cooperating directly with the slide. As the resilient means need not act directly on the shutter itself, the slide can be given any desired shape for the purpose of said cooperation. Again the resilient means need not cooperate with sharp portions of a metal-sheet part.

Further advantages can be obtained with an embodiment of the invention which is characterized in that the disc cassette is provided with latching means for latching the shutter in the closed position and in that the latching means cooperate with the slide. This embodiment also has the advantage that the construction of the slide is independent of the construction of the shutter. Moreover, this construction can easily be made in such a way that there is no excessive wear of the various parts which move relative to one another.

Yet another embodiment of the invention is characterized in that the slide is provided with means for the cooperation with actuating means of a drive apparatus for moving the shutter from the closed position to the operational position.

Generally, the disc cassettes are constructed as two sheels which are mounted onto each other and between which the information disc is disposed. Therefore, an embodiment of the invention is preferred which is characterized in that the slide is movable along one side of the enclosure and is arranged between the two main walls of the disc cassette, and in that the shutter is secured to that side of the slide which faces the exterior of the enclosure. In this way a very good parallel guidance of the slide can be obtained. Connecting the resilient means to the slide does not constitute any significant problem. Once the slide has been mounted assembly of the enclosure of the disc cassette can be completed. It is possible to mount the shutter at a later stage, because it need only be connected to that part of the slide which faces the exterior and it need not be connected to any parts inside the enclosure, such as the resilient means.

A further embodiment of the invention is characterized in that the latching means comprise a latching pin which is resiliently movable in its axial direction between a released position and a latched position; in that the means of the slide which are adapted to cooperate with actuating means of the drive apparatus comprise a locally recessed portion in the slide; in that in the closed position of the shutter the latching pin extends into said recessed portion in its latched position; and in that the slide is provided with an inclined surface for gradually urging the latching pin inwards during the movement of the slide from the operational position to the closed position, which inclined surface extends up to the recessed portion, so that in the recessed portion the latching pin springs back into the latched position. This embodiment ingeniously utilizes the design possibilities provided by the invention in order to achieve a satisfactory cooperation between the slide and a latching pin.

Embodiments of the invention will now be described in more detail, by way of example, with reference to the accompanying drawings, in which:

Fig. 1 is a perspective view at a disc cassette in accordance with the invention with the shutter in a closed position,

Fig. 2 is a view similar to that in Fig. 1, but with the shutter shown in the open position, and

Fig. 3 is an exploded view of the disc cassette shown in the preceding Figures.

In the Figures, which all relate to the same disc cassette, the parts always bear the same reference numerals. The disc cassette comprises a readable information disc 1, for example a magnetic or optical storage disc. The enclosure 2 in which the information disc is accommodated comprises two shells 2A and 2B secured to one another. The enclosure comprises parallel main walls 3A and 3B which are interconnected by side walls 4A, 4B and 5A, 5B respectively and a rear wall 6A, 6B. The two main walls 3A and 3B are formed with a central aperture 7A and 7B respectively which serves for the passage of a drive spindle of a drive apparatus (not shown).

Each of these central apertures is continued as a slot 8A and 8B respectively for the passage of information recording and/or reproducing means of the drive apparatus, such as for example a magnetic or an optical recording/reproducing head.

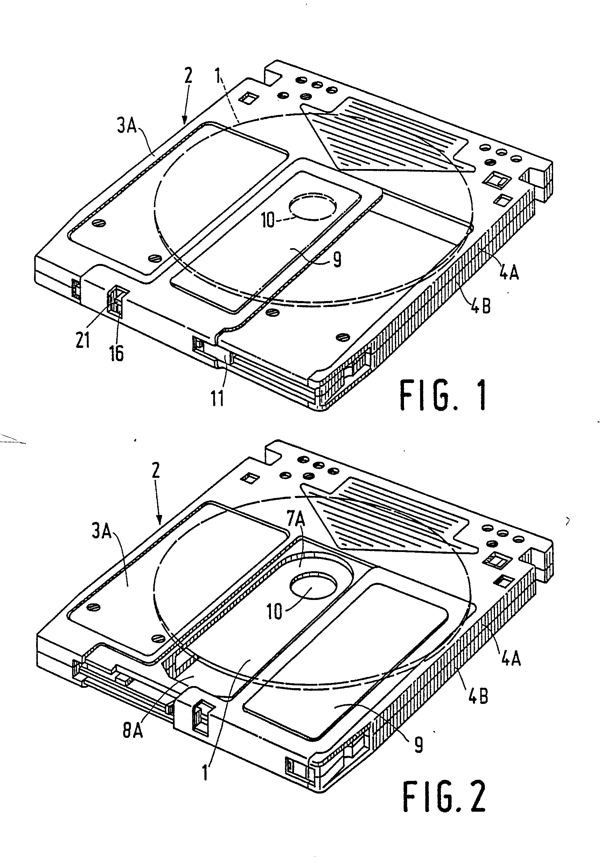

A shutter 9 is movable over the outside of the enclosure and in a closed position, see Fig. 1, covers both the central apertures 7A and 7B and the slots 8A and 8B. In Fig. 2 the shutter 9 is shown in the operational position in which said openings are exposed. In order to enable the central apertures 7A and 7B to be closed the shutter has such a length that it extends beyond said central apertures.

In the embodiment shown the information disc 1 has a centre hole 10 and the central apertures 7A and 7B in the two main walls provide access to said centre hole for the afore-mentioned drive spindles, not shown, of a drive apparatus.

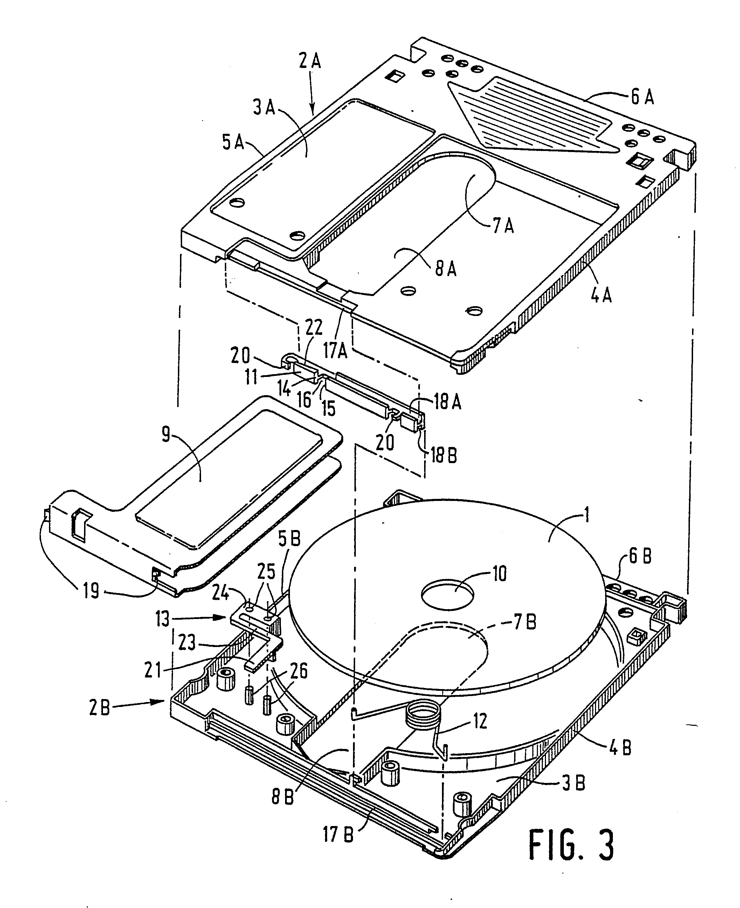

As can be seen in particular in Fig. 3, the disc cassette in accordance with the invention is provided with a slide 11. This slide is slidable by parallel guide means to be described hereinafter. The shutter 9 is rigidly connected to the slide 11, so that the slide and the shutter are together movable between the operational position and the closed position.

For moving the slide from the operational position to the closed position there are provided resilient means 12 in the form of an omega spring which acts on the slide 11. For latching the shutter in the closed position there are provided latching means 13 which also cooperate with the slide 11. For moving the slide from the closed position to the operational position by actuating means of a drive apparatus, the slide is provided with stop surfaces 14 and 15 one on facing sides of a constriction 16. Thus, only the slide 11 cooperates with the resilient means 12, the latching means 13 and the actuating means of a drive apparatus. Consequently, these means need not cooperate directly with the shutter 9 which is made of a thin material.

The slide is movable along the front side of the enclosure 2 and is arranged between the two main walls 3A and 3B. For this purpose these main walls are each provided with a guide ridge 17A and 17B respectively and the slide 11 with corresponding guide slots 18A and 18B. The shutter 9 is secured to that side of the slide 11 which faces the exterior of the enclosure. In the embodiment shown the shutter comprises two lugs 19 and the shutter 11 is provided with two resilient hooks 20 for retaining the lugs.

The latching means 13 comprise an axial movable latching pin which is resiliently movable between a latched position, as is shown in the drawing, and a released position in which it is displaced towards the interior of the disc cassette. In the closed position of the shutter, see Fig. 1, the latching pin 21 extends into the constriction 16 of the slide. Thus, with the aid of the actuating means provided on the drive apparatus for moving the shutter 9 to its operational position, the latching pin 21 can be pressed inwards into its released position.—This enables the shutter to perform the desired movement. The shutter is moved from the operational position back to the closed position by the resilient means 12, the shutter being latched automatically. For this purpose the slide 11 is formed with an inclined surface 22. As the slide moves back the latching pin 21 is gradually pressed inwards by the inclined surface, until the latching pin engages the constriction 16 and springs back into the latched position.

The latching means 13 comprise a single part which is integrally made of a plastics and which in addition to the latching pin 21 comprises a resilient limb 23 and a mounting flange 24 with two openings 25 for securing it to two pins 26 arranged on the main wall 3B.

Within the scope of the invention numerous modifications of the embodiment shown are possible. A common feature of possible embodiments is always that there is provided a slide to which the shutter is secured. The shutter may be connected to the slide in any desired manner, such as by means of screws, an adhesive, hot-melting etc. The shutter and the slide may be manufactured in one piece, for example by injection-moulding from a plastics.

## Claims

1. A disc cassette comprising:
- a readable information disc (1),
- an enclosure (2) in which the information disc (1) is arranged and comprising parallel main walls (3A, 3B) interconnected by side walls (4A,B; 5A,B), at least one of the main walls being formed with a central aperture (7A,B) for the passage of a drive spindle of a drive apparatus and a slot (8A,B) for the passage of information recording and/or reproducing means of the drive apparatus, and
- a shutter (9) which is movable over the outside of the enclosure between a closed position and an operational position, which shutter in its operational position exposes and in its closed position closes at least the slot (8A,B),
characterized in that
- the disc cassette is provided with a slide (11) which is slidably connected to the enclosure by parallel guide means, and
- in that the shutter (9) is rigidly connected to the slide (11), so that the slide and the shutter are together movable between the operational position and the closed position.

2. A disc cassette as claimed in Claim 1, characterized
- in that the disc cassette comprises resilient means (12) for moving the shutter from the operational position to the closed position, and
- in that the resilient means act on the slide.

3. A disc cassette as claimed in Claim 1, characterized in that
- the disc cassette is provided with latching means for latching the shutter in the closed position, and
- in that the latching means cooperate with the slide.

4. A disc cassette as claimed in Claim 1, characterized in that the slide (11) is provided with means (14, 15) for the cooperation with actuating means of a drive apparatus for moving the shutter (9) from the closed position to the operational position.

5. A disc cassette as claimed in any one of the preceding Claims, characterized in that
- the slide (11) is movable along one side of the enclosure (2) and is arranged between the two main walls, and
- in that the shutter (9) is secured to that side of the slide (11) which faces the exterior of the enclosure.

6. A disc cassette as claimed in Claim 5, characterized
- in that the latching means (13) comprise a latching pin (21) which is resiliently movable in its axial direction between a released position and a latched position,
- in that the means of the slide (11) which are adapted to cooperate with actuating means of a drive apparatus comprise a locally recessed portion (16) in the slide,

-in that in the closed position of the shutter (9) the latching pin (21) extends into the recessed portion (16) in its latched position, and

-in that the slide is provided with an inclined surface (22) for gradually urging the latching pin inwards during the movement of the slide (11) from the operational position to the closed position, which inclined surface extends up to the recessed portion, so that in the recessed portion (16) the latching pin springs back into the latched position.

FIG. 1

FIG.2

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 174 651 (SONY) <br><br> * Page 4, line 33 - page 6, line 28; page 10, line 34 - page 11, line 34; claims 22-27; figures * | 1,2,4, 5 | G 11 B 23/03 |
| | --- | | |
| X | EP-A-0 137 965 (HITACHI) <br> * Page 10, line 13 - page 12; pages 17,18; claims; figures * | 1,2,5 | |
| | --- | | |
| X | EP-A-0 164 647 (MATSUSHITA) <br><br> * Page 7, line 6 - page 10, line 5; claims; figures * | 1,2,4, 5 | |
| | --- | | |
| P,X | EP-A-0 218 231 (HITACHI) <br> * Abstract; pages 2-4; claims; figures * | 1-5 | |
| P,A | | 6 | TECHNICAL FIELDS SEARCHED (Int. Cl.4) <br><br> G 11 B |
| | --- | | |
| A | PATENT ABSTRACTS OF JAPAN, vol. 8, no. 65 (P-263)[1502], 27th March 1984; & JP-A-58 212 665 (HITACHI SEISAKUSHO K.K.) 10-12-1983 <br> * Abstract; figure * | 1,2,5 | |
| | --- | | |
| A | GB-A-2 110 462 (SONY) <br> * Claims; figures * | 1,3,6 | |
| | ---     -/- | | |

The present search report has been drawn up for all claims

| Place of search | Date of completion of the search | Examiner |
|---|---|---|
| THE HAGUE | 02-11-1987 | DECLAT E.M.G. |

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 529 701 (SONY) | | |
| A | EP-A-0 142 411 (HITACHI) | | |
| A | GB-A-2 082 371 (SONY) | | |
| D,A | GB-A-2 163 887 (PHILIPS) | | |

TECHNICAL FIELDS SEARCHED (Int. Cl.4)

The present search report has been drawn up for all claims

| Place of search | Date of completion of the search | Examiner |
|---|---|---|
| THE HAGUE | 02-11-1987 | DECLAT M.O. |